# EUROPÄISCHE PATENTSCHRIFT

(11) **EP 1 223 118 B1**
(45) Veröffentlichungstag und Bekanntmachung des Hinweises auf die Patenterteilung: **22.08.2007**
(21) Anmeldenummer: 02000544.3
(22) Anmeldetag: 09.01.2002
(51) Int. Cl.: B65D 88/72, F16K 31/363

(54) **Ventil zum stossartigen Ausblasen von Druckluft zur Beseitigung von Materialanbackungen und -aufstauungen**
Valve for an impulse blowing of compressed air in order to remove caked or accumulated material
Vanne pour le soufflage d' air comprimé par impulsion pour éliminer les amas de materiau.

(30) Priorität: 11.01.2001 DE 10101041
(43) Veröffentlichungstag der Anmeldung: 17.07.2002
(73) Patentinhaber: Agrilux Beteiligungs GmbH, 60311 Frankfurt am Main (DE)
(72) Erfinder: Leibling, Udo, 55411 Bingen (DE)
(74) Vertreter: GROSSE BOCKHORNI SCHUMACHER

(56) Entgegenhaltungen:
- WO-A-97/43195
- DE-A- 19 743 789
- US-A- 4 703 869
- US-A- 4 817 821
- US-A- 5 853 160

## Beschreibung

Die Erfindung betrifft eine Ventileinheit gemäß dem Obergriff des Patentanspruches 1.

Derartige Ventileinheiten sind bekannt, etwa WO 97/43195 A. Diese Ventileinheiten weisen einen in einem Zylinder geführten Kolben auf, der durch Druckluft in eine Endstellung vorgespannt ist, in welcher er die Ausblasöffnung der Ventileinheit schließt. Soll zur Beseitigung von Materialanbackungen ein Luftstoß erzeugt werden, so erfolgt eine Entlüftung durch die Ventileinheit, so dass der Kolbenvorraum des Kolbens entlüftet wird. Aufgrund der Druckverhältnisse löst sich dadurch der Kolben schlagartig von der Ausblasöffnung ab, so dass Druckluft aus dem Speicherbehälter schlagartig als Luftstoß über eine an der Ventileinheit angesetzte Düse ausgeblasen werden kann. Zur Zwangssteuerung des Kolbens bedarf es verschiedener Bauelemente, nämlich Anschluss an eine Druckversorgungsleitung, einen Druckluftspeicher, der für den Fall wirksam eines Mehrwegeventils für die verschiedenen Schaltstellungen und entsprechende Verbindungsleitungen, um die Zwangssteuerung zu bewerkstelligen.

Dadurch ergibt sich ein vergleichsweise kompliziertes Gebilde, was bei der Montage Schwierigkeiten aufwirft.

Das Dokument WO 97/43195A offenbart eine Ventileinheit für eine Vorrichtung zum stoßartigen Ausblasen von Druckluft aus einem Druckluftspeicherbehälter zur Beseitigung von Materialanbackungen in verfahrenstechnischen Behältern, mit einem Ventilgehäuse, einem in einem Zylinder des Gehäuses aufgenommenen Kolben und einer Einrichtung zur Zwangssteuerung dieses Kolbens (Ventilbauteil), der die Ausblasöffnung am Ausblasstutzen des Ventilgehäuses schließt und bei Entlüftung der Ventileinheit schlagartig von der Ausblasöffnung am Ausblasstutzen abgehoben wird, so dass die Druckluft im Speicherbehälter stoßartig über die Ausblasöffnung am Ausblasstutzen ausgeblasen wird, und der Zylinder auf der der Ausblasöffnung am Ausblasstutzen abgewandten Seite durch einen Deckel verschließbar ist.

Aufgabe der Erfindung ist es, eine Ventileinheit der gattungsgemäßen Art derart weiterzubilden, dass eine leichte Montage aber auch Demontage für Wartungsarbeiten erreicht wird.

Diese Aufgabe wird erfindungsgemäß durch die im kennzeichnenden Teil des Anspruches 1 enthaltenen Merkmale gelöst, wobei zweckmäßige Weiterbildungen durch die im kennzeichnenden Teil der Unteransprüche enthaltenen Merkmale definiert sind.

Nach Maßgabe der Erfindung werden die wesentlichen Bauelemente der Zwangssteuerungseinrichtungen im Deckel integriert, was eine einfache Montage der Ventileinheit in einer Herstellfabrik ermöglicht. Zugleich vereinfacht sich die Wartungsarbeit, weil beispielsweise der Zugriff zum Zylinder in einfacher Weise dadurch hergestellt werden kann, dass der Deckel abgenommen wird. Es brauchen also nicht erst verschiedene Bauelemente gelöst zu werden, vielmehr genügt das Lösen der Schraubverbindungen, mit denen der Deckel am Ventilgehäuse gehalten wird. Diese Integration der verschiedenen Bauteile in den Deckel ist deswegen von erheblichem Vorteil und führt letztendlich auch zu einer vereinfachten Handhabung und Bauweise solcher Ventileinheiten.

Nachfolgend wird ein bevorzugtes Ausführungsbeispiel der Erfindung anhand der Zeichnung beschrieben. Darin zeigen
- **Fig. 1**: einen Schnitt durch eine in Schließstellung sich befindliche Ventileinheit,
- **Fig. 2**: den selben Schnitt wie bei Fig. 1, jedoch unter Darstellung der Ventileinheit in geöffneter Stellung,
- **Fig. 3**: eine vergrößerte Darstellung der von der Ausblasöffnung abgewandten Stirnseite des Ventilgehäuses,
- **Fig. 4**: eine vergrößerte Darstellung des Kolbens in seiner geöffneten Stellung sowie
- **Fig. 5**: eine Darstellung zur Erläuterung der Demontage des den Zylinder abdichtenden Deckels

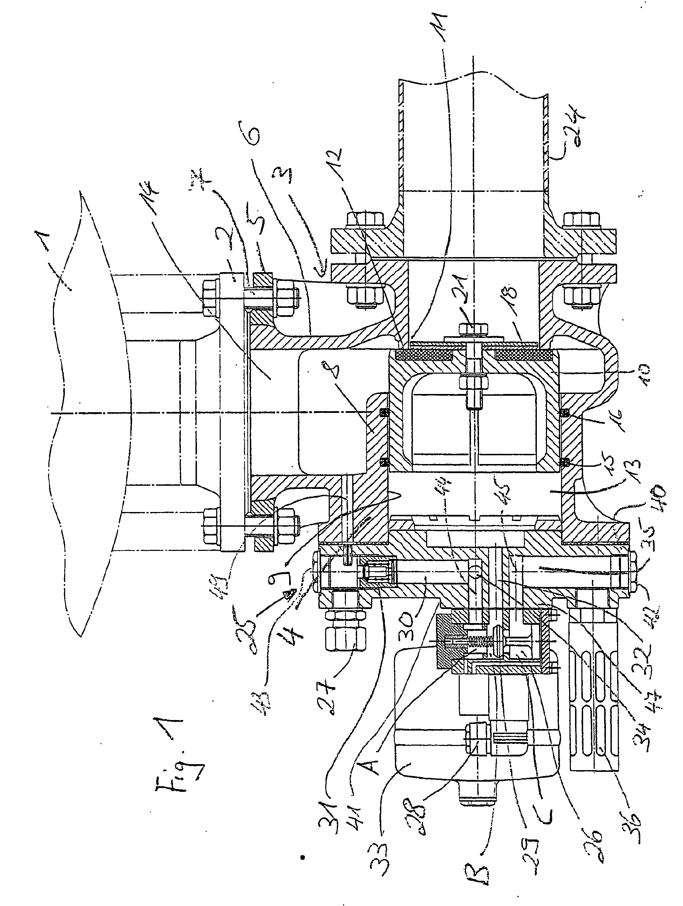

In Fig. 1 ist der nur teilweise und schematisch dargestellte DruckluftSpeicherbehälter mit dem Bezugszeichen 1 versehen. An diesem Speicherbehälter und zwar an seiner Außenseite ist ein flanschartiger Anschluss 2 zur Aufnahmen des allgemeinen mit 3 bezeichneten Schnellentlüftungsventils vorgesehen. Das mit 4 bezeichnete Ventilgehäuse ist als ein im wesentlicher T-förmiger Rohrstutzen ausgebildet und über einen Flansch 5 eines Rohrschenkels 6 mittels über den Umfang angeordneter Schraubbolzen 7 mit dem Flansch 2 verschraubt. Dadurch ist eine leichte Montage des Schnellentlüftungsventils an einem Druckluftspeicherbehälter ermöglicht.

Das Ventilgehäuse 4 weist einen einstückig ausgebildeten Zylinder 8 auf, der eine zylindrische Mantelfläche 9 für einen darin geführten Kolben 10 bildet.

In der in Fig. 1 dargestellten Funktionsstellung ist die Ventileinheit geschlossen, da sich der Kolben 10 in einer Endstellung befindet, in welcher der Kolben mit seiner Stirnfläche die mit 11 bezeichnete Auslassöffnung des Ventilgehäuses schließt. Hierbei liegt der Kolben an einer mit 12 bezeichneten Dichtfläche des Ventilgehäuses an.

Der Kolben 10 ist in diese Endstellung durch Druckluft gedrückt, die sich in dem mit 13 bezeichneten Kolbenvorraum des Ventilgehäuses befindet. Die Abdichtung des Kolbenvorraums 13 gegenüber dem Druckluftspeicherbehälter 1 bzw. dem mit 14 bezeichneten speicheranschlussseitigen Vorraum erfolgt im dargestellten Ausführungsbeispiel durch zwei mit Abstand zueinander angeordneten Dicht- und Führungsringen 15 und 16, die in entsprechenden Nuten in der zylindrischen Mantelfläche 9 aufgenommen und gehalten sind. Zweckmäßigerweise sind diese Dicht- und Führungsringe 15, 16 durch O-Ringe aus hochtemperaturfestem Material und Teflonringen aufgebaut. Deswegen kann die Montage der Ringe bequem vorgenommen werden. Die ein geringes Übermaß besitzenden, relativ wenig elastischen Dichtungen lassen sich soweit zusammendrücken, dass sie, leicht schräg gestellt, in den Zylinder eingeschoben und dann in Ihre entsprechenden Nuten in der Zylindermantelfläche eingespreizt werden können. Dadurch sind die Dichtungen zuverlässig gehalten.

Dabei übernehmen die Dichtungsringe vorzugsweise auch Führungsfunktion für den Kolben, was zur Folge hat, dass die Zylindermantelfläche nicht als Kolbenführungsfläche fein bearbeitet werden muss. Auch verringern sich dadurch erheblich die Herstellkosten. Hierbei ist es möglich, dass nur einer der beiden mit Abstand angeordneten Ringe als Dichtring und der andere als Führungsring ausgebildet ist. Zweckmäßig ist jedoch die Ausbildung beider Ringe als Dicht- und Führungsringe, zumal dann gleiche Dichtringe verwendet werden können. Dies ist wiederum für die Montage vorteilhaft, da der Monteur nicht darauf achten muss, welcher Dicht- oder Führungsring in welche Nut eingelegt werden muss.

Das Ventilgehäuse 4, welches zweckmäßigerweise als Gussteil hergestellt ist, kann nicht zuletzt für diese Ausbildung aus Aluminium, also aus Leichtmetall, hergestellt werden, was wesentlich das Gewicht der außenliegenden Ventileinheit herabsetzt. Selbstverständlich ist es möglich, die zylindrische Mantelfläche zur Verbesserung des Korrosionsschutzes zusätzlich zu beschichten, insbesondere zu passivieren.

Auch der Kolben ist zweckmäßigerweise aus Aluminium hergestellt und im dargestellten Ausführungsbeispiel als Hohlkolben ausgebildet, wobei die geschlossene Stirnfläche des Kolbens der kreiszylinderförmigen Auslassöffnung 11 zugeordnet ist. Durch die Ausbildung des Kolbens als Hohlbauteil wird zugleich das Gewicht der außenliegenden Ventileinheit herabgesetzt.

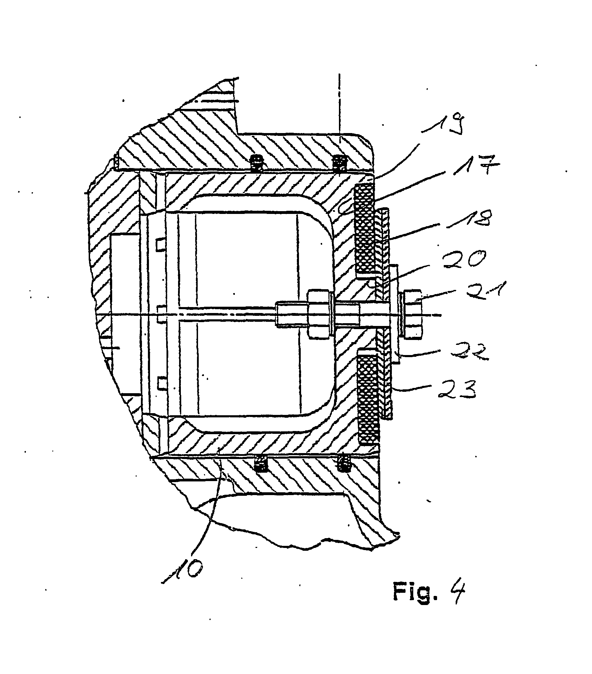

Wie insbesondere aus Fig. 4 hervorgeht, weist der einteilig bzw. einstückig ausgebildete Kolben 10 an seiner Stirnfläche eine vergleichsweise breite Ringnut 17 auf, in welcher ein geeignetes Dichtungselement, hier eine Dichtungsscheibe 18 aus einem warmfesten Elastomer eingelegt ist. Die Ringnut 17 hat bei 19 eine Begrenzung zum Außenumfang des Kolbens hin. Dadurch wird verhindert, dass die Dichtungsscheibe 18, die im Laufe der Zeit unter doch hohen Temperaturbeanspruchungen und den wiederkehrenden Schlägen beim Schließen des Ventils zwangsläufig eine Breitung bzw. eine Verschiebung in radial auswärtiger Richtung erfährt, über die außenseitige Kolbenstirnfläche hinausragt und infolgedessen beim Abheben des Kolbens von der Zylinderwand abgeschert wird. Die Dichtungsscheibe 18 ist hierbei so dimensioniert, dass sie im Hinblick auf eine radial einwärtige Nutwange 20 des Kolbens ein gewisses Spiel hat. Dadurch wird verhindert, dass die Dichtung dreiseitig eingespannt und daher weitestgehend starr ist. Die Dichtung kann also unter den hohen Temperaturbelastungen arbeiten. Die Halterung der auswechselbaren Dichtungsscheibe 18 erfolgt in einfacher Weise über eine mit 21 bezeichnete zentrisch angeordnete Schraubverbindung über eine Unterlegscheibe 22, die auf eine Stütz- und Isolierscheibe 23 drückt. Die innenliegende Isolierscheibe stützt sich hierbei unmittelbar auf dem Kolben ab. Dadurch kann die Schraubverbindung mit einem hohen Drehmoment angezogen werden, um sie gegen ein Lösen zu sichern. Die Isolierscheibe hemmt die Wärmeübertragung von der Reaktionskammer, in welche die Düse 24 (Fig. 1) mündet, auf den Kolben. Der Einfachheit halber kann hier als Isolierscheibe ggf. eine sog. IT-Dichtung oder -Scheibe verwendet werden, wie sie in der Versorgungstechnik zur Abdichtung von geschraubten Flanschverbindungen an Heißwasser- oder Dampfleitungen standardmäßig zum Einsatz kommt und in nahezu beliebigen Größen zur Verfügung steht.

Bei der hier dargestellten Ausführungsform ist das Entlüftungsventil zur Zwangssteuerung des Kolbens 10 in einem mit 25 bezeichneten Deckel aufgenommen, welcher den Zylinder 8 auf der von der Auslassöffnung 11 abgewandten Seite verschließt. In der in Fig. 1 dargestellten Stellung ist hierbei über eine entsprechende Ventilsteuerung der Kolbenvorraum 13 über eine entsprechende Leitung im Deckel, die über eine Ventilkammer 26 führen, mit einem Druckluftversorgungsanschluss 27 verbunden. Dadurch wird in Folge der Druckluftzufuhr und des damit im Kolbenvorraum 13 aufgebauten Drucks der Kolben in seiner Stellung gehalten.

Fig. 1 zeigt in weiteren Einzelheiten, das im Deckel 25 untergebrachte bzw. angeordnete elektrisch betätigte 3-Wegeventil, den sogenannten Würgnippel, über den die elektrische Anschluss- und Versorgungsleitung 28 nach außen geführt wird. Gemäß Fig. 1 ist das 3-Wegeventil so geschaltet, dass ein Ventilkörper 29 die beiden Kammern A und B miteinander verbindet. Von der Kammer A zum Druckluftversorgungsanschluss 27 führt eine durchgehende, abgewinkelte Versorgungsbohrung 30, in der ein Rückschlagventil 31 angeordnet ist, welches nur eine Druckluftströmung vom Druckluftversorgungsanschluss 27 zur Kammer, aber nicht in umgekehrter Richtung gestattet. Die Kammer B ist über eine weitere konzentrische Bohrung 32 mit dem Kolbenvorraum 13 verbunden. Die Verbindung zwischen der Drucklufteinspeisung 27 und dem Druckluftspeicherbehälter 1 erfolgt durch einen in dem Deckel 40 ausgebildeten Drosselabschnitt 49.

Um die Druckversorgung des Kolbenvorraumes 13 auch bei einem etwaigen Druckabfall der Druckversorgungsleitung hinreichend mit Druck beaufschlagen zu können, d. h. um das Ventil auch bei einem Druckaus- oder -abfall wieder zu schließen und nötigenfalls auch verschlossen halten zu können, kann ein Druckspeicher vorgesehen sein, hier in Form eines zylindrischen und auf den Deckel zugleich aufgesetzten Kessels 33. Dieser Kessel 33 steht mit der Leitung zwischen dem Druckluftversorgungsanschluss und der Ventilkammer A in Verbindung - in der Fig. 1 sieht man die mit der Bezugsziffer 34 bezeichnete Mündung der Abzweigung zum Druckspeicher 33. Fällt der im Anschluss zur Druckluftversorgungsleitung 27 stehende Druck ab, so schließt das Rückschlagventil 31 und der Druck im Kolbenvorraum 13 wird dann durch den Druck vom Druckspeicher 33 sichergestellt bzw. wieder aufgebaut.

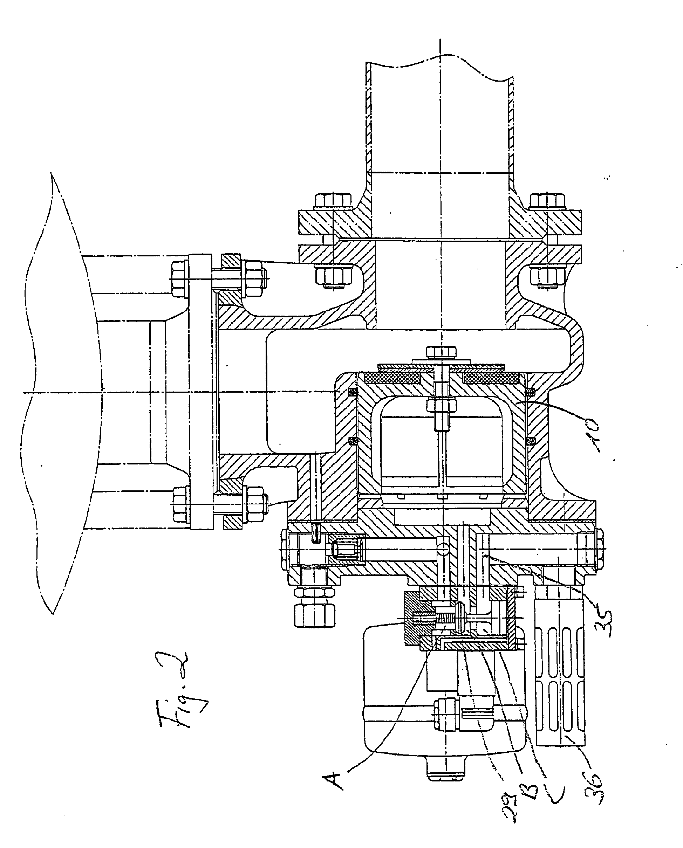

Zum schlagartigen Ablassen des Druckluftspeicherbehälters 1 wird der Kolben 10 in die in Fig. 2 gezeigte Stellung gebracht. Hierzu wird der Kolbenvorraum 13 in die Umgebung entlüftet, woraufhin der Druck im Kolbenvorraum 13 zusammenbricht und der Kolben 10 durch den an der über seinen stirnseitigen Sitz hinausragenden Ringfläche anliegenden Innendruck schlagartig vom Sitz abgehoben wird.

Die Entlüftung des Kolbenvorraums 13 erfolgt dadurch, dass der mit Bezugszeichen 29 bezeichnete Ventilkörper des 3-Wegeventiles in eine solche Stellung gebracht wird, dass die Ventilkammer A verschlossen und die Ventilkammern B und C miteinander verbunden werden. Die Ventilkammer C ist über eine zweimal um 90 ° abknickende Bohrung 35 mit einem Filter-Schalldämpfer 36 verbunden, über den der in der Ventilkammer C anstehende Druck abgeblasen werden kann.

Bei der Ausführungsform nach den Fig. 1 bis 3 ist der Zylinderkopfdeckel 25 so gestaltet, dass er sämtliche druckluftseitig erforderlichen Komponenten enthält und zwischen ihnen, dem Druckluftversorgungsanschluss 27 und dem Kolbenvorraum 13 die erforderliche strömungstechnische Verbindung herstellt.

Wie bereits vorher ausgeführt, sind die wesentlichen Elemente der Zwangssteuerungseinheit für den Kolben im Deckel integriert bzw. wesentliche Bauelemente angeschlossen, so dass der Deckel sämtliche druckluftseitig erforderlichen Komponenten enthält und zwischen ihnen, dem Druckluftversorgungsanschluss 27 und dem Kolbenvorraum 13 die erforderliche strömungstechnische Verbindung herstellt.

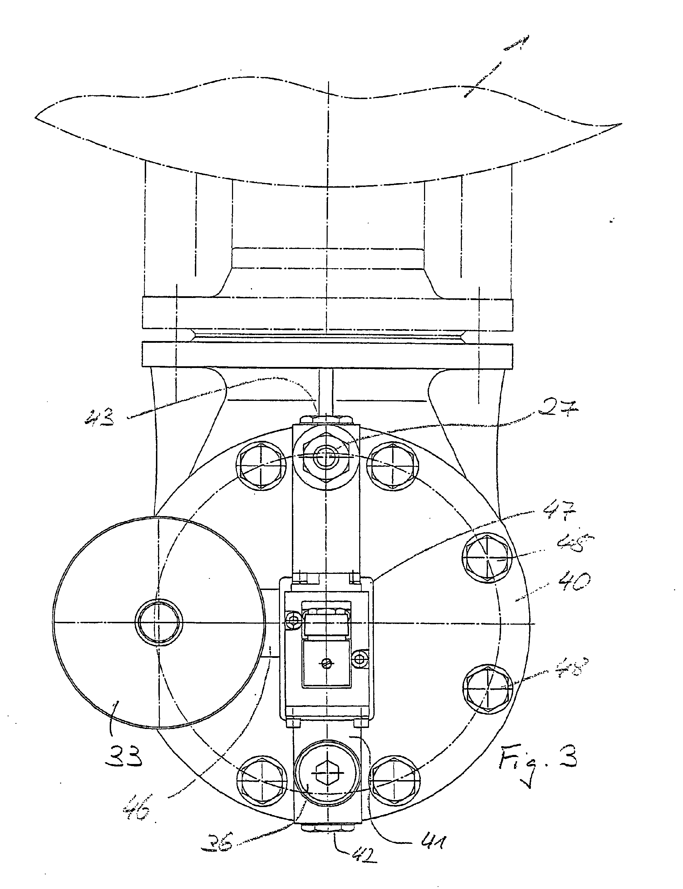

Wie sich insbesondere aus Fig. 3 ergibt, ist das Deckelelement 40 in Form einer Kreisscheibe ausgebildet und vorzugsweise als geschmiedetes oder gegossenes Bauteil erstellt. Das Deckelelement 40 enthält eine sozusagen durchmesserartig verlaufende nach oben (Fig. 1) vorstehende Rippe bzw. Schulter 41, die vom Druckluftversorgungsanschluss 27 bis zum Schalldämpfer 36 verläuft. Diese sich im wesentlichen über den gesamten Durchmesser erstreckende Rippe 41 ist von beiden Seiten her, wie die Fig. 1 und 2 zeigen, parallel zu ihren Verlauf aufgebohrt und durch Gewindestopfen 42 und 43 verschlossen. Diese Querbohrungen sind mit den Bezugszeichen 30 und 35 bezeichnet. Die Querbohrungen reichen bis ins Zentrum des Deckels und münden dort in senkrechter zur Stirnfläche des Deckels verlaufende Kanäle, die hier mit den Bezugszeichen 44 und 45 versehen sind. Die Querbohrung 30 mündet hierbei in den Kanal 44, der zur Kammer A des Mehrwegeventils führt. Die Querbohrung 35 mündet in den Kanal 45, welcher zur Kammer C des Mehrwegventils führt. Ferner ist eine zentrische Bohrung 32 vorgesehen, die die Kammer B mit dem Kolbenvorraum 13 verbindet. Die Kanäle, die sich zu den Querbohrungen 30 und 35 erstrecken sind insgesamt durch von der Stirnseite des Zylinderkopfdeckels aus eingebrachte Bohrungen gebildet, womit sich die erforderlichen Verbindungen zu den Anschlüssen des unmittelbar auf der Rippe angebrachten Mehrwegeventils ergeben. Das Mehrwegeventil wird - unter Zwischenlage einer Dichtung - durch hier nicht gezeigte Schrauben an eine an die Rippe angegossene, flache Plattform 47 gezogen.

Ferner ist der Zylinderkopfdeckel mit einer weiteren, hier senkrecht zur Rippe 41 verlaufenden weiteren Rippe 46 versehen, die in entsprechender Weise entlang ihrer Längsachse aufgebohrt und von außen angebohrt sein kann, um so den Druckspeicher 33 über die Mündung 34 (Fig. 1) mit der Bohrung 30, 44 zwischen dem Druckluftversorgungsanschluss 27 und der Ventilkammer A zu verbinden.

Wie den Fig. 1 und 3 entnommen werden kann, trägt der Zylinderkopfdeckel 25 auch den Druckluftspeicher 33 und den Schalldämpfer 36.

Eine solche Gestaltung des Zylinderkopfdeckels erlaubt eine weittestgehende Vorfertigung im Werk, da der Druckspeicher, das Mehrwegeventil, der Schalldämpfer und das Rückschlagventil komplett am Deckel vormontiert werden können. Zudem werden die Wartungsarbeiten erheblich vereinfacht, weil bei einem Auswechseln des Kolbens lediglich der Deckel abgenommen werden muss und dann ein sofortiger Zugriff in den Zylinder gegeben ist. Zweckmäßigerweise ist der Deckel über Schraubverbindungen 48 mit dem Ventilgehäuse verbunden.

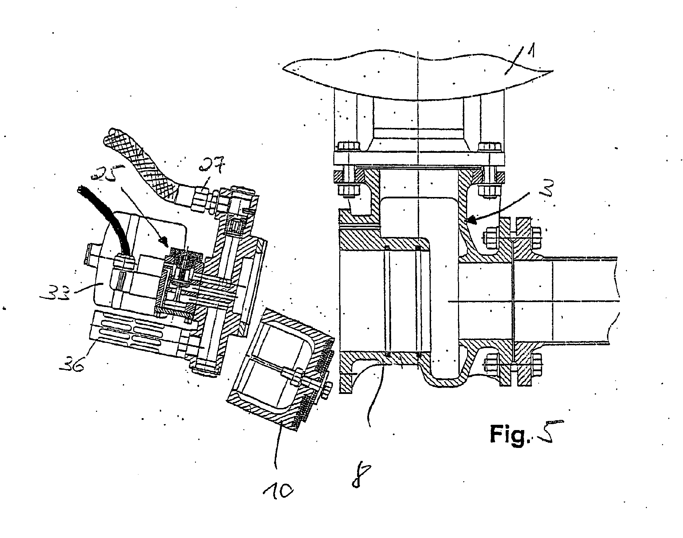

Für die vereinfachte Montage braucht , wie aus Fig. 5. ersichtlich ist, lediglich der Deckel 25 abgenommen zu werden, so dass dann der Kolben 10 aus dem Zylinder 8 herausgenommen werden kann.

## Patentansprüche

1. Ventileinheit für eine Vorrichtung zum stoßartigen Ausblasen von Druckluft aus einem Druckluftspeicherbehälter (1) zur Beseitigung von Materialanbackungen oder -aufstauungen in verfahrenstechnischen Behältern, Bunkern, Silos, Reaktionskammern oder dergleichen, mit einem Ventilgehäuse (4), einem in einem Zylinder (8) des Gehäuses aufgenommenen Kolben (10) und einer Einrichtung zur Zwangssteuerung dieses Kolbens, der vorzugsweise unter Druckluft die Ausblasöffnung (11) des Ventilgehäuses (4) schließt und bei Entlüftung der Ventileinheit schlagartig von der Ausblasöffnung (11) abgehoben wird, so dass die Druckluft im Speicherbehälter (1) stoßartig über die Ausblasöffnung (11) ausgeblasen wird und der Zylinder (8) auf der der Ausblasöffnung (11) abgewandten Seite durch einen Deckel (25) verschließbar ist, wobei im Deckel (25) oder auf dem Deckel (25) ein Mehrwegeventil und ein Rückschlagventil (31) vorgesehen ist, **dadurch gekennzeichnet, dass** als weitere wesentliche Elemente der Zwangssteuerungseinrichtung für den Kolben ein Druckspeicher (33) und ein Schalldämpfer (36) im Deckel vormontiert bzw. im oder auf dem Deckel angeordnet sind.

2. Ventileinheit nach Anspruch 1, **dadurch gekennzeichnet, dass** der Deckel (25) als Verteiler ausgebildet ist, der einen Anschlussstutzen (27) für eine Drucklufteinspeisung und ein Mehrwegeventil aufweist, welches einen Ventilkörper (29) trägt, wobei in den Ventilstellungen jeweils die Drucklufteinspeisung (27) mit dem Drucklufteingang (A) des Mehrwegeventils und vorzugsweise parallel dazu mit einem Druckluftspeicher (33) verbunden, weiterhin ein Druckluftausgang (C) des Mehrwegeventils mit einem Entlüftungsorgan (36) verbunden und weiterhin ein dem Kolben vorgeschalteter Kolbenvorraum (13) mit einem dritten Anschluss (B) des Mehrwegeventils verbunden wird, und dass die Verbindungsleitungen oder - Kanäle im Deckel als Bohrungen innerhalb des Deckels ausgebildet sind.

3. Vorrichtung nach Anspruch 1 oder 2, **dadurch gekennzeichnet, dass** der Deckel (25) die Drucklufteinspeisung (27) mit dem Drucklufteingang (A) des Mehrwegeventils und dem Druckluftspeicher (33) über Bohrungen (30, 34, 44) und ein in den Deckel eingesetztes Rückschlagventil (31) verbindet.

4. Vorrichtung nach einem der vorhergehenden Ansprüche, **dadurch gekennzeichnet, dass** der Deckel (25) die Drucklufteinspeisung (27) mit dem Kolbenvorraum (13) über die Leitungen (30, 44, 32) verbindet.

5. Vorrichtung nach einem der vorhergehenden Ansprüche, **dadurch gekennzeichnet, dass** die Verbindung zwischen der Drucklufteinspeisung (27) und dem Druckluftspeicherbehälter (1) durch einen in dem Deckel (40) ausgebildeten Drosselabschnitt (49) erfolgt.

## Claims

1. A valve unit for an apparatus for impulsively discharging compressed air from a compressed air storage container (1) for removing caked or accumulated material in technical process containers, bunkers, silos, reaction chambers or the like including a valve housing (4), a piston (10) received in a cylinder (8) in the housing and a device for positively controlling this piston, which preferably closes the discharge opening (11) of the valve housing (4) under the action of compressed air and is lifted impulsively from the discharge opening (11) when the valve unit is vented so that the compressed air in the storage container (1) is discharged impulsively via the discharge opening (11) and the cylinder (8) on the side remote from the discharge opening (11) is closable by a cover (25), a manifold valve and a non-return valve (31) being provided in the cover (25) or on the cover (25), **characterised in that** a pressure reservoir (33) and a silencer (36) are arranged in the cover pre-installed in or on the cover as further important elements of the positive control device for the piston.

2. A valve unit as claimed in claim 1, **characterised in that** the cover (25) is constructed as a distributor, which includes a connecting pipe (27) for a compressed air supply and a manifold valve, which carries a valve body (29), whereby in the valve positions the compressed air supply (27) is connected to the compressed air inlet (A) of the manifold valve, and preferably in parallel therewith, to a compressed air reservoir (33), a compressed air outlet (C) of the manifold valve is further connected to a venting element (36) and further a cylinder space (13) in front of the piston is connected to a third connection (B) of the manifold valve and that the connecting lines or passages in the cover are constructed in the form of bores within the cover.

3. Apparatus as claimed in claim 1 or 2, **characterised in that** the cover (25) connects the compressed air supply (27) to the compressed air inlet (A) of the manifold valve and the compressed air reservoir (33) via bores (30, 34, 44) and a non-return valve (31) inserted into the cover.

4. Apparatus claimed in one of the preceding claims, **characterised in that** the cover (25) connects the compressed air supply (27) with the cylinder space (13) via the conduits (30, 32, 44).

5. Apparatus claimed in one of the preceding claims, **characterised in that** the connection between the compressed air supply (27) and the compressed air storage container (1) is effected by a throttle section (49) formed in the cover (40).

## Revendications

1. Ensemble de soupape pour un dispositif destiné au soufflage d'air comprimé par impulsions à partir d'un réservoir accumulateur d'air comprimé (1) pour éliminer les amas de matériau dans les récipients, conteneurs, silos, réacteurs ou analogues utilisés dans les procédés industriels, avec un logement de soupape (4), un piston (10) monté dans un vérin (8) du logement et un dispositif pour la commande forcée de ce piston qui, de préférence, sous l'effet de l'air comprimé, ferme l'ouverture de soufflage (11) du logement de soupape et, lors de la purge d'air de l'unité de soupape, est soulevé par à-coups par rapport à l'ouverture de soufflage (11), de sorte que l'air comprimé contenu dans le réservoir accumulateur (1) est expulsé par à-coups par l'ouverture de sortie (11) et le vérin (8) sur le côté détourné de l'ouverture de sortie peut être fermé par un couvercle (25), tandis que dans le couvercle (25) ou sur le couvercle (25), est prévue une soupape multivoies et une soupape anti-retour (31), **caractérisée en ce qu'**en tant qu'élément supplémentaire essentiel du dispositif de commande forcée pour le piston, est monté en amont un réservoir de pression (33) et un amortisseur sonore (36) dans le couvercle, dans ou sur le couvercle.

2. Ensemble de soupape selon la revendication 1, **caractérisée en ce que** le couvercle (25) est conçu en tant que distributeur qui présente une tubulure de raccordement (25) pour une alimentation d'air comprimé et une soupape multivoies, laquelle supporte un corps de soupape (29), tandis que dans les positions de soupape, l'alimentation d'air comprimé (27) est respectivement raccordée avec l'entrée d'air comprimé (A) de la soupape multivoies et, de préférence, est raccordée parallèlement à celle-ci avec un réservoir d'air comprimé (33), de plus une sortie d'air comprimé (C) de la soupape multivoies est raccordée à un organe de purge d'air (36) et, par ailleurs, une chambre de piston (13) en amont du piston est reliée à un troisième raccordement (B) de la soupape multivoies, et les conduites de raccordement ou canaux sont formés dans le couvercle en tant qu'alésages à l'intérieur du couvercle.

3. Dispositif selon la revendication 1 ou 2, **caractérisé en ce que** le couvercle (25) relie l'alimentation d'air comprimé (27) avec l'entrée d'air comprimé (A) de la soupape multivoies et le réservoir d'air comprimé (33) par les alésages (30, 34, 44) et une soupape anti-retour (31) montée dans le couvercle.

4. Dispositif selon l'une des revendications précédentes, **caractérisé en ce que** le couvercle (25) relie l'alimentation d'air comprimé (27) avec la chambre amont du piston (13) par l'intermédiaire des conduites (30, 44, 32).

5. Dispositif selon l'une des revendications précédentes, **caractérisé en ce que** la liaison entre l'alimentation d'air comprimé (27) et le réservoir accumulateur d'air comprimé (1) s'effectue par une section d'étranglement (49) formée dans le couvercle (40).
